# EUROPEAN PATENT APPLICATION

(11) **EP 0 690 637 A2**
(43) Date of publication of application: **03.01.1996**
(21) Application number: 95109795.5
(22) Date of filing: 23.06.1995
(51) Int. Cl.: H04Q 7/20, H04Q 7/32

(54) **Method and system for providing a digital wireless local loop**

(30) Priority: 01.07.1994 US 270070
(71) Applicant: US WEST Technologies, Inc., Boulder, Colorado 80303 (US)
(72) Inventor: Lerman, Ruvin I., Longmont, Colorado 80503 (US)
(74) Representative: Grättinger & Partner

(57) **Abstract**

A method and system for providing a digital wireless local loop. The system includes a primary transceiver for transmitting and receiving a digital signal at a first selected frequency from an outdoor macrocell base transceiver and for transmitting and receiving the digital signal at the first selected frequency to and from a portable handset. The method includes the step of receiving a digital audio/video/data signal having a first frequency from an outdoor macrocell base transceiver. The method also includes the step of retransmitting the signal having the first frequency at a second frequency to a portable handset. The step of retransmitting the signal includes receiving the signal having the first frequency and retransmitting the signal at an intermediate frequency, and receiving the signal having the intermediate frequency and retransmitting the signal at the second frequency to the portable handset. The method also provides for communications originating from the portable handset.

## Description

### Technical Field

This invention relates to cellular wireless local loops. In particular, this invention relates to digital wireless local loops derived from an outdoor cellular macrocell base transceiver for use by an indoor portable handset or a device incorporating such a handset. The invention is particularly suited for single or multi-family dwellings or a multi-use building environment.

### Background Art

Most metropolitan areas are now equipped with one or more forms of wireless communications networks which provide radio transmissions in the microwave frequency band to wireless telephone customers. For example, a plurality of macrocell base transceivers capable of transmitting digital radio signals to and receiving digital radio signals from one or more portable handsets are located throughout various wireless service areas. A portable handset, as the term is used herein, refers to a wireless voice telephone such as a cellular telephone or the like in a speech or data mode that can be installed at a fixed location in an indoor environment, temporarily installed in a vehicle or be completely mobile. In the case of cellular telephones, a typical cellular service area comprises a metropolitan area or larger region.

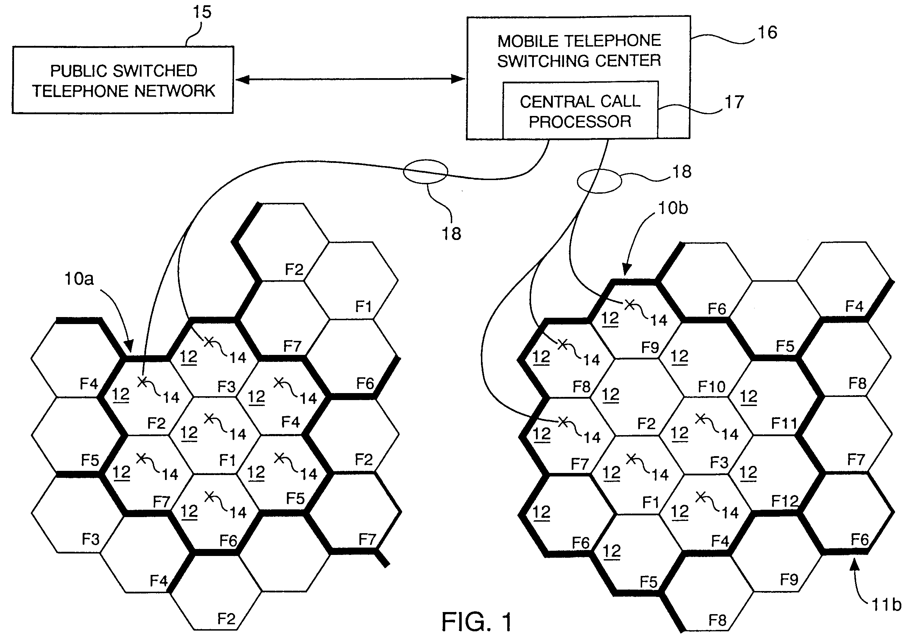

An example illustrating two possible configurations of a cellular service area comprised of segments 10a, 10b is shown in Figure 1. The segment 10a illustrates a seven-cell reuse pattern; i.e., the frequency band allocated to cellular telephone customers is divided into seven macrocells 12 operating at seven different frequency channels f1-f7. The frequency channels f1-f7 typically are not consecutive frequencies of the cellular radio frequency band. For example, frequency channel f1 may comprise channels 1, 3 and 5, while frequency channel f2 may comprise channels 2, 4 and 6. The seven frequency channels f1-f7 are repeated for each segment 10a of the entire cellular service area. The cellular service area 10b illustrates a twelve cell cite reuse pattern.

Service area 10b has reduced capacity per coverage area since the cellular frequency band is divided into twelve macrocells 12, and hence twelve frequency channels f1-f12, as opposed to the seven frequency channels f1-f7 of segment 10a. However, the larger segment 10b provides a greater distance between macrocells 12 that use the same frequency channel, resulting in reduced co-channel interference, e.g., frequency channel f6 of segment 10b versus frequency channel f6 of segment 11b.

Located within each macrocell 12 is a base transceiver 14. Each base transceiver 14 is able to broadcast and receive radio signals utilizing its corresponding frequency channel. For example, a base transceiver 14 located in segment 10a would transmit and receive radio signals from a wireless transceiver utilizing frequency channels f4 while adjacent base transceivers 14 would operate at frequency channels f1, f2, f3, f5, f6 and f7.

When a telephone call to a wireless transceiver originates from either another wireless transceiver or a land-based telephone via a Public Switched Telephone Network (PSTN) 15, a caller must access a Mobile Telephone Switching Center (MSC) 16. The MSC 16 receives the call request and instructs a central call processor 17 to begin call processing. The central call processor 17 transmits a signal over a dedicated line 18 (such as a land-based line or microwave link, etc.) to a predetermined base transceiver 14. The central call processor 17 determines which base transceiver 14 to transmit the signal based on the location of the portable handset. When the portable handset enters a macrocell 12, the portable handset registers its location with a corresponding home or visitor location register. The control call processor 17 has access to the registers and, therefore, directs the telephone call to the appropriate base transceiver 14.

Portable handsets can be used indoors as well as outdoors. Therefore, a portable handset located in an indoor environment requires service from a base transceiver 14 located outdoors. The indoor portable handset can communicate directly with an outdoor base transceiver 14 if both the base transceiver 14 and the portable handsets are allowed to exert sufficient power to penetrate the walls of a building. However, the more power a base transceiver 14 or a wireless transceiver transmits the more interference it causes to other base transceivers 14 as well as the associated portable handsets which are assigned the same frequencies.

Consequently, a need has developed for a wireless transmission system and, in particular, wireless local loops or links (WLL) which utilize the attenuation properties of buildings within their associated service areas. A WLL is a wireless link which connects an indoor cellular portable handset or a customer premises wired standard telephone to an outdoor cellular base transceiver on demand. Such a system should permit the buildings to act as shields so as to isolate outdoor users as well as the user's respective base transceiver 14 from interference caused by the indoor WLL. Still further, the WLL should allow users to make inexpensive local calls using the same portable handsets which were used to make expensive outdoor calls. Further, the WLL should provide indoor communication quality for users of outdoor portable handsets when the users transfer to indoor environments.

Several known systems have attempted unsuccessfully to address this need. One known system, for example, provides a WLL suitable for low market penetration of portable handsets. A dual-mode device is provided that requires full functionality of a portable handset as well as a regular telephone interface. This system, however, is costly for users that require primarily telephone network service since the users bear the cost of wireless functionality that is not needed for their operations.

A second known system provides a wireless link between a portable handset and a Private Branch Exchange ("PBX") utilized in a private business environment. As known to those skilled in the art, a PBX is a telephone system, complete with a private automatically operated switchboard and individual telephone sets, installed and operated on private premises but having a trunk-line connection to the central office. This system utilizes base transceivers and a corresponding control unit located within the building of the private business.

In operation, the control unit assigns frequency channels to the indoor base transceivers. The frequency assignment is based on the amount of energy detected by each indoor base transceiver. The base transceivers transmit and receive signals from a portable handset via Analog Mobile Phone Service ("AMPS") air interface standard. Low energy AMPS channels, i.e., frequencies belonging to a different macrocell than that of the local outdoor macrocell base transceiver, are assigned to the wireless link between the indoor base transceivers and a cellular portable handset. Therefore, the attenuation properties of the building are used to shield the indoor communications from outdoor signals.

In such systems, following receipt of an analog signal from the portable handset, the indoor base transceivers are required to perform full demodulation and base-band speech processing in order to communicate with the PBX. As a result, the indoor base transceivers act in the same manner as an outdoor macrocell base transceiver. Significantly, systems of this type do not provide wireless links between an outdoor cellular base station and indoor wireless users on demand. These systems also produce unacceptable speech delays when applied to digital cellular systems.

A third known system provides increased indoor coverage by amplifying both transmitted and received signals between the outdoor macrocell base transceiver and the indoor portable handset. To prevent the amplifiers from acting as oscillators, the gain of the amplifiers is very limited and, in most cases, does not compensate for building penetration and indoor propagation losses, which result in poor indoor coverage. Moving objects or people in the immediate vicinity of the amplifiers may change their input-to-output isolation, resulting in oscillating. Such an amplifier then becomes a jammer to all portable handsets in the vicinity.

As referenced above, the known prior art fails to disclose an inexpensive cellular WLL. The known prior art also fails to disclose a digital cellular WLL. Consequently, a need has developed to provide a wireless local loop system and method as referenced above which may be practically and economically implemented for use by single and multi-family dwellings and multi-use building environments.

It is further desirable that such a system be compatible with existing digital cellular radio communications. Finally, such a system should neither require the allocation of more radio frequencies than are currently allocated to wireless communication systems, nor require a substantial portion of existing wireless frequencies.

### Disclosure Of The Invention

It is thus a general object of the present invention to overcome the limitations of the prior art by providing a cellular wireless local loop for use in single and multi-family dwellings and multi-use building environments which utilizes digital radio communications.

Yet another object of the present invention is the provision of a digital wireless local loop that provides cellular services to indoor users utilizing the attenuation properties of buildings.

Still further, it is an object of the present invention to provide a wireless local loop of the type referenced above that transmits and receives digital signals at a frequency distinct from the frequency of the corresponding outdoor macrocell base transceiver.

In carrying out the above objects and other objects of the present invention, a method is disclosed for providing a digital wireless local loop for use by a wireless transceiver in an indoor environment utilizing an outdoor macrocell base transceiver transmitting a digital signal at a first selected frequency.

The method begins with the step of receiving the digital signal at a first selected frequency from the outdoor macrocell base transceiver when a call is initiated from another portable handset or a land-based telephone. The method continues with the step of retransmitting the signal having the first selected frequency to the portable handset at a second selected frequency.

The step of retransmitting the signal at a second selected frequency includes receiving the signal at the first selected frequency and retransmitting the signal at an intermediate frequency, and further includes receiving the signal at the intermediate frequency and retransmitting the signal at a second selected frequency to the portable handset.

The method also includes the step of receiving the digital signal at the second selected frequency from the portable handset when the portable handset initiates a call to another portable handset or a land-based telephone. The method further includes the step of retransmitting the digital signal received by the portable handset to the base transceiver at the first selected frequency.

In further carrying out the above objects and other objects, features and advantages of the present invention, a system is also provided for carrying out the steps of the above described method.

The system includes a primary transceiver operative to transmit and receive a digital signal to and from the outdoor base transceiver at a first selected frequency and to transmit and receive the digital signal at a second selected frequency to and from a portable handset.

The primary transceiver includes a secondary transceiver and a supplemental transceiver. The secondary transceiver is in communication with the outdoor base transceiver and the supplemental transceiver. The secondary transceiver transmits and receives the digital signal to and from the outdoor base transceiver at the first selected frequency and transmits and receives the digital signal to and from the supplemental transceiver at an intermediate frequency.

The supplemental transceiver is in communication with the secondary transceiver and the portable handset. The supplemental transceiver transmits and receives the digital signal to and from the secondary transceiver at the intermediate frequency and transmits and receives the digital signal to and from the portable handset at the selected second frequency.

The above objects, features and advantages of the present invention, as well as others, are readily apparent from the following detailed description of the best mode for carrying out the invention when taken in connection with the accompanying drawings, wherein like reference numbers correspond to like components.

### Brief Description Of The Drawings

The present invention will be apparent from the detailed description taken in conjunction with the accompanying drawings in which:
FIGURE 1 is a schematic diagram of a prior art cellular telephone system illustrating typical layouts of cellular service areas;
FIGURE 2 is a block diagram illustrating the general sequence of steps associated with the operation of the present invention;
FIGURE 3 is a block diagram illustrating the general sequence of steps associated with the operation of an alternate embodiment of the present invention;
FIGURE 4 is a block diagram of the preferred embodiment of the present invention; and
FIGURE 5 is a block diagram of an alternative embodiment of the present invention made in accordance with the teachings of the preferred embodiment of this invention;

### Best Modes For Carrying Out The Invention

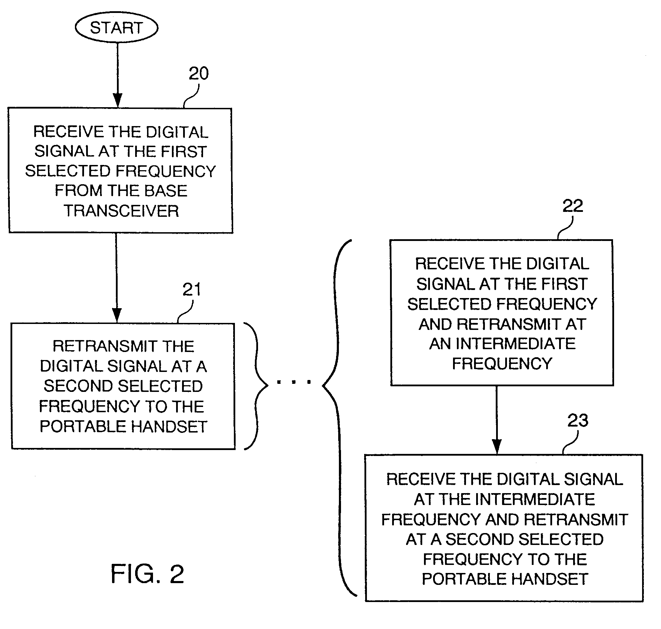

With reference to Figure 2 of the drawings, there is provided a block diagram illustrating the sequential steps associated with the operation of the present invention when a telephone call to a wireless transceiver originates from either another portable handset or a land-based telephone via a PSTN.

An outdoor macrocell base transceiver 14 transmits digital signals to various portable handsets at a first selected frequency within the frequency band constituting the cellular radio spectrum of segments 10a, 10b. The digital signal may be either an audio, data or video signal. As shown by block 20, the first step of the present invention includes receiving the digital signal at the first selected frequency from the outdoor base transceiver 14.

The next step of the present invention includes retransmitting the signal at a second selected frequency to the portable handset, as shown by block 21. The second frequency is a frequency of the cellular radio spectrum distinct from the frequencies assigned to the base transceiver 14 of the macrocell 12 in which the portable handset is registered.

In a Frequency Division Duplexing (FDD) cellular system, the outdoor base transceiver 14 transmits signals at a first selected frequency and receives signals at a different frequency simultaneously. In this system, the second selected frequency of the signal being transmitted to the portable handset is different from the second selected frequency of the signal being transmitted from the portable handset. A Time Division Duplexing (TDD) cellular system, on the other hand, transmits signals for a certain period of time and then receives signals for another period of time, thereby allowing the signals to be transmitted and received at the same frequency. In this system, the second selected frequency of the signal being transmitted to the portable handset may be the same as the second selected frequency of the signal being transmitted from the portable handset.

The second frequency is determined by scanning the indoor environment for a frequency having the least amount of energy of all the frequencies scanned. The frequencies are scanned by a scanning device located within the indoor environment. The frequency with the least amount of energy may vary in different buildings located in a single outdoor macrocell 12.

Since the original digital signal is retransmitted using only a different frequency, there is no change in the content of the message being transmitted or received nor is there a need to decipher the content of the message. Consequently, there is no delay due to modulation and demodulation as well as baseband speech processing or control channel processing.

The step 21 of retransmitting the digital signal at the second selected frequency is further represented by blocks 22 and 23. As shown by block 22, the signal at the first selected frequency is received and retransmitted at an intermediate frequency.

Next, the signal at the intermediate frequency is received and retransmitted at the second frequency to the portable handset, as shown by block 23.

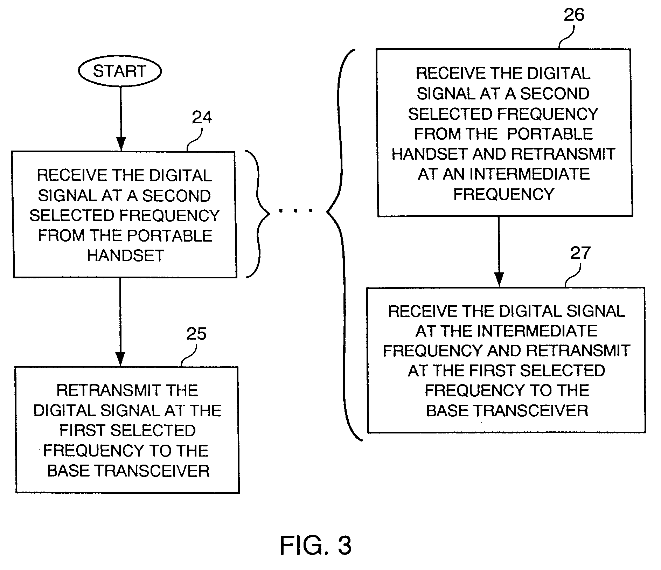

Figure 3 of the drawings provides a block diagram of the sequential steps associated with the operation of the present invention when a telephone call originates from the portable handset to either another portable handset or a land-based telephone via a PSTN.

As shown by block 24, the first step includes receiving the digital signal at a second selected frequency from the portable handset. The digital signal is then retransmitted at the first selected frequency to the base transceiver, as shown by block 25.

The step 24 of receiving the digital signal at a second selected frequency is further represented by blocks 26 and 27. First, the digital signal is received at the second selected frequency and retransmitted at an intermediate frequency, as shown by block 26.

Finally, the digital signal is received at the intermediate frequency and retransmitted at the first selected frequency for receipt by the base transceiver, as shown by block 27.

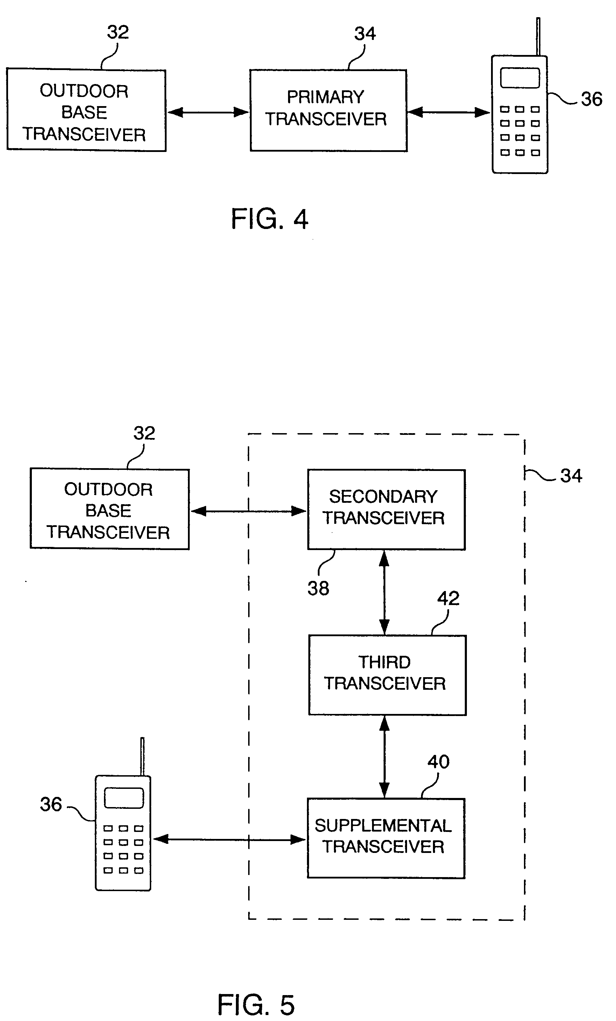

Referring now to Figure 4, there is shown a digital wireless local loop ("WLL") made in accordance with the teachings of the present invention. As shown, the WLL consists of a base transceiver 32. The base transceiver 32 transmits and receives digital signals at a first selected frequency. The first selected frequency is disposed within a predetermined frequency band constituting a portion of the predefined wireless and preferably cellular radio spectrum.

The WLL also includes a primary transceiver 34 in communication with the outdoor base transceiver 32 and a portable handset 36. The primary transceiver 34 transmits and receives the digital signal to and from the outdoor base transceiver 32 at the first selected frequency.

In addition to transmitting and receiving the digital signal to and from the outdoor base transceiver 32, the primary transceiver 34 transmits and receives the digital signal to and from the portable handset 36 at a second selected frequency. The second selected frequency is determined by the primary transceiver 34.

The primary transceiver 34 may be coupled to the outdoor base transceiver 32 via a wireline link or over-the-air RF communication. The portable handset 36 may be either a fixed or a portable unit.

In single or multi-family dwellings and/or multi-use building environments having a relatively low customer market of indoor subscribers, the primary transceiver 34 may include a window or an outdoor patch panel antenna applied to a window or several windows of offices or apartments in which the occupant or occupants own a portable handset 36. In this situation, it may be more economical to integrate the primary transceiver 34 with a portable handset 36. The integration can be done on demand by a temporary connection of a portable handset 36 into a box which, while connected to the portable handset 36, contains the functionality of a primary transceiver 34 and further includes an interface to a wireline standard telephone set. Alternatively, the functionality of a portable handset 36 may be embedded in the box.

Where the number of indoor subscribers is higher, the primary transceiver 34 may include a central antenna attached to the building. The primary transceiver 34 may be an inexpensive repeater adapted to communicate with both a plurality of portable handsets 36 and the antenna. The primary transceiver 34 acts as a picocell, i.e., a small base transceiver in the building located within a macrocell.

Alternatively, a plurality of primary transceivers 34 may be located throughout the indoor environment for communication with a plurality of portable handsets 36.

An alternative embodiment shown in Figure 5 illustrates a WLL for yet an even higher number of indoor subscribers. The primary transceiver 34 includes a secondary transceiver 38 and a supplemental transceiver 40. The secondary transceiver 38 transmits and receives the digital signal from the outdoor base transceiver 32 at the first selected frequency and transmits and receives the digital to and from the supplemental transceiver 40 at an intermediate frequency. The secondary transceiver 38 is in communication with the outdoor base transceiver 32 and the supplemental transceiver 40.

The supplemental transceiver 40 transmits and receives the digital signal at intermediate frequency to and from the secondary transceiver 38 and transmits and receives the digital signal at the second selected frequency to and from the portable handset 36. The intermediate frequency is necessary due to the high selectivity required of the secondary transceiver 38 when operating in the cellular radio spectrum. The supplemental transceiver 40 is in communication with the secondary transceiver 38 and the portable handset 36. The supplemental transceiver 40 may be coupled to the secondary transceiver 38 via a wireline link or over-the-air RF communication. The intermediate frequency may be converted to another appropriate frequency when the signal is transmitted via wireless link. The intermediate frequency is converted to a cellular frequency when the signal is transmitted over the air. The cellular frequency is distinct from the first selected frequency and the second selected frequency.

In this embodiment, the supplemental transceiver 40 scans the frequencies of the indoor cellular radio spectrum for the frequency with the least amount of energy and selects the second frequency utilized to communicate with the portable handset 36.

A plurality of supplemental transceivers 40 may be placed uniformly throughout the indoor environment. The number of supplemental transceivers 40 to be chosen depends on the size of the indoor environment and the amount of power allowed to be transmitted by each supplemental transceiver 40 to the portable handset 36. Each of the plurality of supplemental transceivers 40 transmits and receives the digital signal to a plurality of portable handsets 36 at distinguished second selected frequencies. It is possible that one of the plurality of supplemental transceivers 40 transmits and receives the digital signal at a same second selected frequency as another of the plurality of supplemental transceivers 40 within the indoor environment provided there are a sufficient number of floors between the supplemental transceivers 40 to act as a shield in preventing interference between the two supplemental transceivers 40.

Alternatively, a third transceiver may be disposed between the secondary transceiver 38 and the supplemental transceiver 40. The third transceiver 42 acts as an extender for a single or a plurality of supplemental transceivers 40. The third transceiver 42 is useful when the secondary transceiver 38 and the supplemental transceiver 40 communicate via an over-the-air RF link. For health reasons, the transmission power allowed for over-the-air RF communications between the secondary transceiver 38 and the supplemental transceiver 40 may be limited to a few milliwatts. This power will be insufficient for a reliable secondary transceiver 38 located on top of a building near an antenna to transmit and receive signals to and from a plurality of supplemental transceivers 40 in large multistory buildings, especially if some of the supplemental transceivers 40 are located on lower floors.

In low capacity situations, the plurality of supplemental transceivers 40 are normally positioned to provide the chain of intermediate frequencies from the secondary transceiver 38 located on top of a building to portable handsets 36. In this situation, the supplemental transceivers 40 transmit and receive signals to and from the portable handsets 36 at the second selected frequency. However, as capacity increases, the intermediate frequency may become exhausted and not extend to all the supplemental transceivers 40. In this case, the secondary transceiver 38 transmits several intermediate frequencies, and one or a plurality of third transceivers 42 act as repeaters for the intermediate frequencies. The third transceiver 42 may physically reside in the same box as the supplemental transceiver 40.

In a situation in which the outdoor cellular capacity needs exceed the available spectrum for combined indoor and outdoor communications, the secondary transceiver 38 may have a coaxial or an optical cable connection to a bank of outdoor base transceivers 32. In this case, the secondary transceiver 38 and the supplemental transceiver 40 may have to be tuned to a frequency other than the first selected intermediate frequency.

While the best modes for carrying out the invention have been described in detail, those familiar with the art to which this invention relates will recognize various alternative designs and embodiments for practicing the invention as defined by the following claims.

## Claims

1. For use in cooperation with an outdoor macrocell base transceiver, the base transceiver operative to transmit and receive a digital signal at a first selected frequency, a system for providing a digital wireless local loop in an indoor environment, comprising:
a primary transceiver operative to transmit and receive the digital signal to and from the base transceiver at the first selected frequency, the primary transceiver further operative to transmit and receive the digital signal at a second selected frequency; and
a portable handset in communication with the primary transceiver operative to transmit and receive the digital signal to and from the primary transceiver at the second selected frequency.

2. The system of claim 1 wherein the first and second selected frequencies are within a predefined frequency band.

3. The system of claim 2 wherein the predefined frequency band comprises the cellular radio spectrum.

4. The system of claim 1 wherein the second selected frequency is determined by the primary transceiver.

5. The system of claim 1 wherein the digital signal is an audio signal.

6. The system of claim 1 wherein the digital signal is a video signal.

7. The system of claim 1 wherein the digital signal is a data signal.

8. The system of claim 1 wherein the primary transceiver includes a central antenna disposed outside the indoor environment.

9. The system of claim 1 wherein the primary transceiver includes a plurality of antennas disposed throughout the indoor environment.

10. The system of claim 1 wherein the primary transceiver is a repeater disposed in the indoor environment.

11. The system of claim 1 wherein the primary transceiver is combined with the portable handset.

12. The system of claim 1 wherein the primary transceiver comprises:
a secondary transceiver in communication with the outdoor base transceiver and a supplemental transceiver for transmitting and receiving the digital signal to and from the outdoor base transceiver at the first selected frequency, the secondary transceiver further operative to transmit and receive the digital signal to and from the supplemental transceiver at an intermediate frequency; and
a supplemental transceiver in communication with the secondary transceiver and the portable handset for transmitting and receiving the digital signal to and from the secondary transceiver at the intermediate frequency, the supplemental transceiver further operative to transmit and receive the digital signal to the portable handset at the second selected frequency.

13. The system of claim 12 wherein the supplemental transceiver is coupled to the secondary transceiver via a wireline link.

14. The system of claim 12 wherein the supplemental transceiver is coupled to the secondary transceiver via over-the-air RF communication.

15. The system of claim 12 wherein the primary transceiver includes a plurality of supplemental transceivers disposed throughout the indoor environment.

16. The system of claim 11 further comprising a third transceiver disposed between the secondary transceiver and the supplemental transceiver for extending the transmission range between the secondary transceiver and the supplemental transceiver.

17. For use in cooperation with an outdoor macrocell base transceiver, the base transceiver operative to transmit and receive a digital signal at a first selected frequency, a method for providing a digital wireless local loop in an indoor environment, comprising:
providing a primary transceiver operative to transmit and receive the digital signal to and from the base transceiver at the first selected frequency, the primary transceiver further operative to transmit and receive the digital signal at a second selected frequency; and
providing a portable handset in communication with the primary transceiver for transmitting and receiving the digital signal to and from the primary transceiver at the second selected frequency.

18. The method of claim 17 wherein the step of providing a primary transceiver includes providing a central antenna disposed outside the indoor environment.

19. The method of claim 17 wherein the step of providing a primary transceiver includes providing a plurality of antennas disposed throughout the indoor environment.

20. The method of claim 17 wherein the step of providing a primary transceiver includes:
providing a secondary transceiver in communication with the outdoor base transceiver and a supplemental transceiver for transmitting and receiving the digital signal to and from the outdoor base transceiver at the first selected frequency, the secondary transceiver further operative to transmit and receive the digital signal to and from the supplemental transceiver at an intermediate frequency; and
providing a supplemental transceiver in communication with the secondary transceiver and the portable handset for transmitting and receiving the digital signal to and from the secondary transceiver at the intermediate frequency, the supplemental transceiver further operative to transmit and receive the digital signal to the portable handset at the second selected frequency.

21. The method of claim 17 wherein the step of providing a primary transceiver includes providing a plurality of supplemental transceivers disposed in the indoor environment.

22. The method of claim 21 wherein the plurality of supplemental transceivers transmit and receive the digital signal at the intermediate frequency to a plurality of portable handsets at a plurality of distinguished second selected frequencies, the plurality of distinguished second selected frequencies varying in sensitivity to interference with the indoor/outdoor cellular radio communications.

23. The method of claim 20 further comprising providing a third transceiver for transmitting and receiving the digital signal to and from the secondary transceiver at the intermediate frequency, the third transceiver further for transmitting and receiving the digital signal to and from the supplemental transceiver at a second intermediate frequency.

24. A method for operating a portable handset in an indoor environment to communicate with an outdoor macrocell base transceiver, the base transceiver operative to transmit and receive digital signals to and from the portable handset at a first selected frequency, the method comprising:
receiving the digital signal at the first selected frequency from the base transceiver; and
retransmitting the digital signal at a second selected frequency for receipt by the portable handset.

25. The method of claim 24 wherein the step of receiving the digital signal at the first selected frequency from the base transceiver is aided by a central antenna disposed outside the indoor environment.

26. The method of claim 24 wherein the step of receiving the digital signal at the first selected frequency from the base transceiver is aided by a plurality of antennas disposed throughout the indoor environment.

27. The method of claim 24 wherein the step of retransmitting the digital signal at the second selected frequency for receipt by the portable handset is performed by a repeater disposed in the indoor environment.

28. The method of claim 24 wherein the step of retransmitting the digital signal at a second selected frequency for receipt by the portable handset includes:
receiving the digital signal at the first selected frequency and retransmitting the digital signal at an intermediate frequency; and
receiving the digital signal at the intermediate frequency and retransmitting the digital signal at the second selected frequency for receipt by the portable handset.

29. The method of claim 28 wherein the step of receiving the digital signal at the intermediate frequency and retransmitting the digital signal at the selected second frequency includes retransmitting the signal to a plurality of portable handsets.

30. The method of claim 28 wherein the step of receiving the digital signal at the intermediate frequency and retransmitting the digital signal at the second selected frequency further includes scanning all frequencies of the cellular radio spectrum for the frequency having the least amount of energy.

31. A method for operating a portable handset in an indoor environment to communicate with an outdoor macrocell base transceiver, the base transceiver operative to transmit and receive digital signals to and from the portable handset at a first selected frequency, the method comprising:
receiving the digital signal at a second selected frequency from the portable handset; and
retransmitting the digital signal at the first selected frequency for receipt by the base transceiver.

32. The method of claim 31 wherein the step of receiving the digital signal at the second selected frequency from the portable handset is performed by a repeater disposed in the indoor environment.

33. The method of claim 31 wherein the step of receiving the digital signal at the second selected frequency from the portable handset includes:
receiving the digital signal at the second selected frequency and retransmitting the digital signal at an intermediate frequency; and
receiving the digital signal at the intermediate frequency and retransmitting the digital signal at the first selected frequency.

34. A method for providing a wireless local loop between an indoor environment and an outdoor macrocell base transceiver, the base transceiver operative to transmit and receive digital signals to and from the portable handset at a first selected frequency within the cellular radio spectrum, the method comprising:
receiving the digital signal at the first selected frequency from the base transceiver;
retransmitting the digital signal at a second selected frequency for receipt by the portable handset;
receiving the digital signal at the second selected frequency from the portable handset; and
retransmitting the digital signal at the first selected frequency for receipt by the base transceiver.
